# EUROPEAN PATENT SPECIFICATION

(11) **EP 3 431 233 B1**
(45) Date of publication and mention of the grant of the patent: **08.09.2021**
(21) Application number: 18184062.0
(22) Date of filing: 17.07.2018
(51) Int. Cl.: B26D 1/08, B26D 3/16, B26D 5/12, B26D 7/02, F16L 1/16, E02F 3/40, E02F 5/00

(54) **SUBSEA CUTTING ASSEMBLY**
UNTERWASSERSCHNEIDANORDNUNG
ENSEMBLE DE COUPE SOUS-MARIN

(30) Priority: 18.07.2017 GB 201711551
(43) Date of publication of application: 23.01.2019
(73) Proprietor: Utility Rov Services Limited, Newcastle upon Tyne, Tyne and Wear NE1 8ND (GB)
(72) Inventor: Crawford, Patrick, Cupar, Fife KY15 5DR (GB)
(74) Representative: Murgitroyd & Company

(56) References cited:
- WO-A1-2017/099607
- US-A- 5 044 827
- US-A1- 2005 194 000
- US-B1- 7 351 010
- US-B2- 9 242 388

## Description

The present application relates to a subsea cutting assembly for handling and cutting subsea structures such as tubular members, for example, cables, pipes and bundles of such members, in a subsea environment.

### BACKGROUND

A wide variety of subsea structures such as pipes, cables, and the like are deployed in underwater locations, for example on sea or ocean beds. These structures can serve a multitude of purposes including, but not limited to, power conveyance or fluid transport. It can be financially and environmentally advantageous to re-use some subsea structures either in whole or in part in other areas, reducing the manufacturing, transportation, and deployment costs associated with laying pipeline or cables underwater.

Either by choice via sequential dredging and laying operations, or merely by the shifting of sand on the sea bed, structures deployed on the sea bed are frequently at least partially submerged under sand. Currently, when the structure is to be salvaged, cut, and/or moved, it first has to be excavated from the sea bed to allow grabbing machinery to reach around the circumference of the structure for a secure and stable grip, to combat the forces that will be applied during cutting, and to reduce the risk of dropping the cut section during transportation.

US9242388 (Franze), US7351010 (Kelly), US5044827 (Gray et al) and US2005/0194000 (Todack) disclose existing designs of cutting apparatus for cutting columnar items under water, which are useful for understanding the invention. US3741517 (Pogonowski) and US3740017 (Pogonowski) disclose clamping devices that are useful for understanding the present invention.

### SUMMARY

According to the present invention, there is provided a subsea cutting assembly according to claim 1.

Optionally the arms are adapted to close around the structure to be handled and cut in the closed configuration.

Optionally the frame has an opening at one end through which the arms extend in the open configuration, communicating with a pocket adapted for containing and protecting the blade and other components. The frame optionally comprises generally parallel struts which can optionally comprise hollow tubulars welded together. Optionally the frame is adapted to connect to a handling or lifting apparatus, for example, an ROV or crane.

Optionally the pivot for the arms is located in the pocket.

Optionally the opposed faces of the first and second portions of each of the arms form a general L-shape, which optionally has angles between the first and second portions of each arm of approximately 90° +/- up to 20%. Optionally the angles can be precisely 90° so that when the arms are closed, the first and second portions are each parallel, but in some examples, the angles between the first and second portions can be less than 90°, so that the second portions of the arms are non-parallel with the arms are closed.

Optionally each arm is formed from at least two panels or plates. Optionally the plates are arranged parallel to one another, with opposed faces facing one another and exposed faces facing away from one another.

Optionally one arm, e.g. the first arm, has a recess to receive the other arm, e.g. the second arm, in the recess when the arms are in the closed configuration. Optionally the recess is formed between the plates of the first arm, which can be spaced apart from one another by a gap, permitting the second arm to be received in the recess between the spaced apart plates of the first arm.

Each arm optionally includes a proximal or upper portion that forms the first portion of each arm and is optionally attached at one end of the distal portion to the frame via the pivot, and a distal or lower portion that forms the second portion of each arm, and is connected to the proximal portion. Optionally the distal portion is connected in a cantilever manner to the proximal portion at one end of the distal portion. Optionally the arm terminates at the other end of the distal portion. Optionally the first and second portions are rigidly connected together and optionally move as a unitary item around the pivot point on the frame.

Optionally the plates are made of a single piece of metal, for example punched or profile cut out of a single sheet of metal, or moulded as one piece. Optionally the plates of each arm are spaced apart from one another and optionally connected to each other across the gap formed between the opposed faces of the plates, but in the first arm, the plates are optionally braced apart only outside the recess adapted to receive the second arm. Optionally one arm, e.g. the first arm, has a larger gap between its plates than the other arm, which is optionally able to be accommodated within the recess on the one arm. Optionally the distance between the opposed faces of the plates of the first arm is substantially equal to the distance between the exposed faces of the plates of the second arm. Optionally the second arm is configured to fit within the gap between the opposed faces of the first arm when the arms are in the closed configuration. Optionally the plates are parallel to each other, with each plate in an arm optionally completely aligned with the other plate in the same arm.

Optionally when the arms are closed, the inner surfaces of the arms lie in the same plane, optionally perpendicular to the central vertical axis of the frame.

Optionally the plates comprise at least one orifice that passes through the proximal portion of each arm. Optionally the plates comprise more than one orifice, optionally aligned along the longitudinal axis of the proximal portion. Optionally there is at least one orifice in the distal portion of the plate, optionally aligned along the same axis as the orifices in the proximal portion. Optionally the plates are connected or braced by beams, e.g. hollow rods that are fixed within the orifices, e.g. welded. This configuration helps to reduce the overall weight of the cutting assembly. Optionally the bracing is disposed outside the recess in the first arm.

Alternatively the plates may be connected by another suitable connecting means such as solid rods or bolts. Optionally the connecting means of the first arm are longer than the connecting means of the second arm in order to accommodate the difference in the spacing between the plates of the first and second arms.

Optionally each arm incorporates a heel that extends from the interconnection between the first and second portions of each arm towards the frame when the arms are in the open configuration. Optionally an outer face of the heel is chamfered or tapered, and the heel extends in alignment with the inner face of the second portions of the arms. Optionally the heel engages a stop member on the frame when the arms are open, limiting the travel of the arms around the pivot and transferring loads from the arms directly to the stop member on the frame, rather than through the pivot and the ram assembly. Optionally the chamfer on the heel matches a chamfer on the stop member. Optionally the heel curves from a steep taper into the outer face of the distal portion of the arm. Optionally the outer face of the distal portion of the arm is also tapered at a shallower angle than the heel.

Optionally the distal end of the second portion of each arm has a pointed tip, optionally having a greater angle of chamfer than that of the heel. Optionally, the pointed distal end of the arm is formed by a tapered face of the distal end meeting the inner face of the second portion of the arm. The pointed end of the arm is optionally adapted to dig into the substrate supporting a structure to be handled and cut, e.g. the sea bed during grabbing of the subsea structure as the arms move from the open configuration to the closed configuration, around the subsea structure. The plates of the arms enhance the arms' ability to penetrate through particulate material such as sand in the substrate underlying or surrounding the structure being cut, due to the surface area of the arms being reduced where the arms enter the substrate. This also reduces the volume of sand and debris that needs to be displaced as the arms move around and under the subsea structure during closing.

Optionally the arms are actuated by ram assemblies that each comprise a piston and a hydraulic cylinder, which can be controlled and optionally powered from the ROV from which the assembly is deployed, although they could alternatively be powered and/or controlled from the surface. Optionally each arm is moved by one respective ram assembly, but optionally more than one ram assembly may be used to move the arms. The same ram assemblies optionally retract the arms during opening, and close the arms during closing. Optionally the ram assemblies each connect to a respective crossbeam on the frame at an upper end of the ram assembly (i.e., the end furthest from the opening of the frame). Optionally the connection between the frame and the ram assembly comprises a first pivot connector, allowing the ram assembly to pivot relative to the first pivot connecter. Optionally the first pivot connector is fixed in position relative to the frame. Optionally the ram assembly can pivot around a pivot point spaced apart from the frame as the piston extends and retracts within the cylinder. Optionally the ram assemblies each connect at their lower end to a second pivot connector fixed to a respective arm, for example, connecting via a plate that is itself fixed to the outer face of the first portion of each arm. Optionally each ram assembly can pivot around the second pivot connector as the piston extends and retracts. Optionally when the arms are to be actuated from the open configuration to the closed configuration, the pistons are extended and the arms pivot around their connection to the frame.

In some examples, one benefit of the combination of features claimed is that as the assembly is dropped into position around the structure to be cut, each arm reacts against the opposing arm as they are actuated and move around their arcs into the closed configuration by the ram assemblies. Optionally, this further enhances the ability of each arm to penetrate the substrate. Optionally, rather than being reliant on the self-weight of the subsea cutting assembly to drive the arms into the substrate, the force is optionally provided by or assisted by the rams. The rams optionally generate far more force than is possible when relying on the weight of the subsea cutting assembly itself. This has the benefit that effective penetration can be achieved even where the substrate may be tightly compacted around the pipe, bundle, or cable to be cut. In addition, as the weight of the subsea cutting assembly is not essential to the function of the tool, the subsea cutting assembly can be manufactured in such a way that the weight of the assembly is minimised, making it easier to transport and control the assembly using an ROV.

Optionally the inner face of the second portion of one arm, e.g. the second arm, incorporates an anvil surface for the blade to engage when making the cut, and optionally to cut or crush the item against. Optionally the anvil surface faces radially into the area enclosed by the arms when the arms are in the closed configuration. Optionally the anvil surface can withstand the cutting forces of the blade, and can be hardened. Optionally the anvil surface comprises a steel plate. Optionally the anvil surface is formed on only one of the arms, e.g. the second arm, which is optionally received in the recess of the first. Optionally the anvil surface is planar. Optionally the inner faces of the arms combine in the same plane as the anvil surface when the arms are closed.

Optionally the subsea cutting assembly comprises a locking mechanism that is adapted to lock the arms when the arms are in the closed configuration. Optionally the distal portions of the arms are locked together by the locking mechanism. Optionally the second arm slides or slots between the opposed faces of the plates forming the first arm in a shearing motion when the arms move from the open to the closed configuration. Optionally the locking mechanism comprises latching members which move in a direction perpendicular to the plates of each arm between engaged and disengaged configurations. Optionally the first arm comprises at least one aperture in each plate of the first arm, optionally more than one aperture, located in the distal portions of the plates of the first arm. Optionally the apertures are rectangular. Optionally the apertures are aligned along the same axis as one another, which is optionally parallel with the planar surface of the inner face of the second portion of the first arm.

Optionally the second arm comprises at least one aperture in the distal portions of each plate of the second arm that align with the apertures of the first arm when the arms are in the closed configuration.

Optionally the second arm comprises at least one movable latching member, optionally adapted to selectively extend outwards from the apertures in the second arm through each aperture of the first arm. Optionally the latching member can comprise one or more pins or dogs. Optionally each latching member extends outwards from both sides of the second arm through apertures in both plates of the first arm.

In one example, the latching member comprises a movable dog. Optionally each dog is adapted to move by a cam action so that as the arms move into the closed configuration the dogs are moved into a locking configuration by rotation around a pivot point to lock the first and second arms into the closed configuration. Optionally each latching member (e.g. each dog) comprises a hooked end that hooks over one end of the apertures in the first arm. Optionally each hook faces the first portion of the arm, which can optionally help the dogs on one arm to clamp the other arm against movement during operation. This also helps to resist the extremely high forces during cutting operations which push downwards on the closed arms. The locking mechanism helps to prevent the arms from splaying outwards while the force is applied. The interlocking of the arms, combined with the relative arrangement of the first and second portions of the arms and the angles therebetween, provide a cutting assembly that is resistant to deformation, torsion, and splaying as a result of the significant forces applied during the cutting operation. Optionally the dogs are aligned along the same axis as one another, which is optionally parallel with the planar surface of the inner face of the second portion of the second arm.

Optionally the blade guide extends out from the inner faces of the first portions of the arms. Optionally the blade guide comprises a channel formed between two protruding ribs. Optionally each rib has one planar inner face, forming a wall of the blade guide, and optionally a tapered outer face. Optionally the spacing between the ribs is machined to closely match the thickness of the blade, to reduce deviation of the blade from a straight path during cutting. This reduces the risk of bending or misalignment of the blade as it is engaging the subsea structure.

Optionally the ribs are formed as protrusions on a plate, optionally formed or cut as part of the plate itself. Optionally the plate is fixed to the inner face of the first portions of the arms, for example by welding, parallel to the plates of the arms. Optionally the plate itself forms the inner face of the first portions of the arms. Optionally the plate and the blade guide are manufactured from or faced with a different material to the arm and/or the frame, optionally a hard compound, optionally with a low friction coefficient.

Optionally the inner faces of the first and second portions of the arms complement the shape of the outer edges of the blade. Optionally the cutting edge of the blade (e.g. at its lower surface) is perpendicular to the inner faces of the arms. Optionally the profile of the cutting edge of the blade can be angled to match the profile of the second portions of the arms. For example, the second portions of the arms can be connected to the first portions at an angle less than or greater than 90 degrees, and the cutting edge of the blade can be shaped to match this.

Optionally the assembly incorporates a gripping device to grip the structure being cut. Optionally, when the arms are in the closed configuration, the gripping device may be extended to assist with holding the subsea structure in position as the cutting operation is carried out, or optionally to hold the subsea structure after cutting as the subsea structure is moved, for example. Optionally the apparatus comprises two gripping devices adapted to clamp the subsea structure on either side of the cutting assembly. Optionally the gripping devices are independent and optionally independently actuable, optionally by at least one piston or ram per gripping device. Rams could be controlled or powered from the ROV or from the surface. Optionally the gripping devices are configured to actuate simultaneously. Optionally each gripping device is actuated by a ram assembly comprising a piston and a hydraulic cylinder. Optionally each gripping device presses down on the upper facing surface of the subsea structure. Optionally each gripping device comprises three planar surfaces, one optional central surface that is aligned to be parallel with the anvil surface on the second portion of the arm, and two others extending outwardly from said central portion at an angle towards the second portions of the arms, so that the three planar surfaces are suitable for engaging a curved structure such as a pipe to be cut on the anvil surface formed by the second portions of the arms. Optionally each gripping device may engage the structure with a partially curved gripping member. Optionally, the outer surfaces are oriented at angles that face the structure being cut, so that the shape of the gripping devices can centralise the structure to be cut on the middle of the anvil surface, which can be useful to prevent or reduce uneven loading on the arms and would also keep the centre of gravity central when lifting the cut structure.

Optionally, after a structure has been grabbed, and optionally gripped, and is ready to be cut, the blade is pressed downwards onto the structure by at least one hydraulic ram, optionally two, optionally three, or optionally four hydraulic rams, symmetrically placed for equitable distribution of force across the length of the cutting edge of the blade.

Optionally during cutting of the subsea structure the structure is crushed before, during, and/or after the cut. Optionally the end of the structure is crushed while being cut. Crushing the end of the subsea structure can be advantageous where, for example, the structure is a pipe having a bore which is to be sealed to resist escape of the contents of the bore, for example, the bore can optionally contain flowline bundles supported by wheeled carriages. The crushed ends can retain the wheeled carriages within the section of pipe during transport.

Optionally the end of the structure is crushed from one side, optionally the side engaging the anvil surface, while being cut. Optionally the structure is crushed from more than one side. Optionally blade and the anvil surface are adapted to engage opposing sides of the structure during the cut. Optionally the crushing occurs during the cutting of the subsea structure by the blade, optionally as the blade presses on the upper side of the subsea structure while the lower side of the structure optionally correspondingly presses on the anvil surface, where "upper" and "lower" are relative to the subsea cutting assembly.

Optionally the arms remain rigid in the closed configuration, and the blade is optionally held within the ribs forming the blade guide so that the blade resists movement other than the cutting motion optionally extending along the vertical axis of the assembly. Optionally this arrangement maintains the edge of the blade in a parallel configuration relative to the anvil surface during cutting. Optionally this arrangement enhances the crushing of the subsea structure along the cut, optionally applying symmetrical force across the subsea structure during cutting and optionally evenly crushing the end of the subsea structure, optionally in a symmetrical pattern. Optionally as the subsea structure is crushed, the opposing points of the inner surface(s) of the subsea structure approach each other (for example when it is a tubular, pipe, bundle, or similar structure being cut). Optionally the subsea structure is initially round in cross-section, and as it is cut, the structure optionally deforms in the vicinity of the cut to adopt a complimentary profile to the facing edges of the blade and the anvil surface, for example, to adopt parallel surfaces on the structure being cut as they are being crushed during the cut.

Optionally, the inner surface(s) is compressed but the opposing points or sides do not contact each other and the end of the structure is partially crushed, optionally taking on at least a partially oval cross-section. Optionally the inner surface(s) is compressed and the opposing points make contact at the end of the cut. Optionally, the inner surface flattens to form opposing inner surfaces, which optionally make partial contact towards the centre of the end of the structure, to optionally substantially close off the end of the subsea structure.

Optionally the end of the structure is crimped such that the inner surface of the initially round subsea structure is flattened, optionally forming opposing inner surfaces, which are optionally flattened against each other, optionally such that the initially round surface transforms to a flat line. Optionally the inner surfaces of the structure are substantially completely flattened against each other to seal the end of the subsea structure. Optionally, depending on e.g. the forces applied and the material of the subsea structure, the crushing of the subsea structure may seal against ingress or egress of fluid, or at least to resist or reduce the passage of fluid through the cut ends. Optionally crushing of the subsea structure may resist ingress and/or egress of debris.

Where the subsea structure is a cable, and is therefore not hollow, the end of the cable being cut is optionally not crushed together to the same extent as a hollow tubular may be. Optionally, the end of the cable is at least partially crushed. Optionally, for example where the cable is armoured, layered, or comprises further internal cables or such like, some layers and optionally some materials may be crushed during severing while other layers may be severed with minimal crushing. For example, where there is a comparatively malleable material contained within one of the concentric layers, this material is more likely to be crushed at the cutting end as a result of its material properties. In comparison, a harder material may undergo less crushing during the same cut.

Optionally the frame is connected to an ROV by a pivoting connection. Optionally the frame can pivot around the pivoting connection during cutting operations. Optionally the pivot axis is perpendicular to the central axis of the cutting assembly. Allowing the frame to pivot during cutting reduces the size, and therefore the weight, of the frame structure required to counteract e.g. uneven loads. Optionally the pivoting connection allows pivotal movement around one axis, which may extend from one side of the generally rectangular frame to the other, optionally around more than one axis.

Also according to the present invention there is provided a method of handling and cutting a subsea structure according to claim 12.

Optionally the method includes actuating the first and second arms between open and closed configurations with ram assemblies.

Optionally the method includes sliding the second arm into a gap formed in the first arm to arrive at the closed configuration of the arms.

Optionally the method includes providing a planar anvil surface on an inner face of the second portion of at least one arm for the blade of the cutting assembly to cut against, and cutting the subsea structure against the anvil surface. Optionally the method includes at least partially crushing at least one end of the subsea structure during the cutting operation. Optionally the method includes retaining components of the subsea structure inside the subsea structure, optionally by at least partially closing at least one end of the subsea structure, optionally by crushing the walls or sides of the subsea structure, optionally against the anvil surface.

Optionally the method includes resisting separation of the first and second arms when in the closed configuration by interlocking the first and second arms when closed. Optionally the method includes mechanically actuating a locking mechanism to interlock the first and second arms together in the closed configuration. Optionally the method includes actuating at least one dog, optionally two or more dogs, by engaging the first arm with a cammed surface of the or each dog as the arms move into the closed configuration. Optionally the method includes rotating the or each dog around a pivot point. Optionally the method includes latching the or each dog onto the first arm, optionally by providing the or each dog with a hooked end that may pass through an aperture in a plate of the first arm.

Optionally the method includes clamping or gripping the subsea structure with at least one gripping device. Optionally the method includes clamping the subsea structure with the gripping device or devices during manipulation of the subsea structure, for example lifting or transporting.

Optionally the method includes lifting, handling, or otherwise manipulating the subsea structure out of the water, for example on the deck of a vessel.

The various aspects of the present invention can be practiced alone or in combination with one or more of the other aspects, as will be appreciated by those skilled in the relevant arts. The various aspects of the invention can optionally be provided in combination with one or more of the optional features of the other aspects of the invention. Also, optional features described in relation to one aspect can typically be combined alone or together with other features in different aspects of the invention. Any subject matter described in this specification can be combined with any other subject matter in the specification to form a novel combination.

Various aspects of the invention will now be described in detail with reference to the accompanying figures. Still other aspects, features, and advantages of the present invention are readily apparent from the entire description thereof, including the figures, which illustrates a number of exemplary aspects and implementations. The invention is also capable of other and different examples and aspects, and its several details can be modified in various respects, all without departing from the scope of the present invention. Accordingly, each example herein should be understood to have broad application, and is meant to illustrate one possible way of carrying out the invention, without intending to suggest that the scope of this disclosure, including the claims, is limited to that example. Furthermore, the terminology and phraseology used herein is solely used for descriptive purposes and should not be construed as limiting in scope. Language such as "including", "comprising", "having", "containing", or "involving" and variations thereof, is intended to be broad and encompass the subject matter listed thereafter, equivalents, and additional subject matter not recited, and is not intended to exclude other additives, components, integers or steps. Likewise, the term "comprising" is considered synonymous with the terms "including" or "containing" for applicable legal purposes. Thus, throughout the specification and claims unless the context requires otherwise, the word "comprise" or variations thereof such as "comprises" or "comprising" will be understood to imply the inclusion of a stated integer or group of integers but not the exclusion of any other integer or group of integers.

Any discussion of documents, acts, materials, devices, articles and the like is included in the specification solely for the purpose of providing a context for the present invention. It is not suggested or represented that any or all of these matters formed part of the prior art base or were common general knowledge in the field relevant to the present invention.

In this disclosure, whenever a composition, an element or a group of elements is preceded with the transitional phrase "comprising", it is understood that we also contemplate the same composition, element or group of elements with transitional phrases "consisting essentially of", "consisting", "selected from the group of consisting of", "including", or "is" preceding the recitation of the composition, element or group of elements and vice versa. In this disclosure, the words "typically" or "optionally" are to be understood as being intended to indicate optional or non-essential features of the invention which are present in certain examples but which can be omitted in others without departing from the scope of the invention.

All numerical values in this disclosure are understood as being modified by "about". All singular forms of elements, or any other components described herein are understood to include plural forms thereof and vice versa. References to directional and positional descriptions such as upper and lower and directions e.g. "up", "down" etc. are to be interpreted by a skilled reader in the context of the examples described to refer to the orientation of features shown in the drawings, and are not to be interpreted as limiting the invention to the literal interpretation of the term, but instead should be as understood by the skilled addressee.

### BRIEF DESCRIPTION OF THE DRAWINGS

In the accompanying drawings:
Figures 1-4 show rear, side, perspective and from beneath views of a subsea cutting assembly in the open configuration;

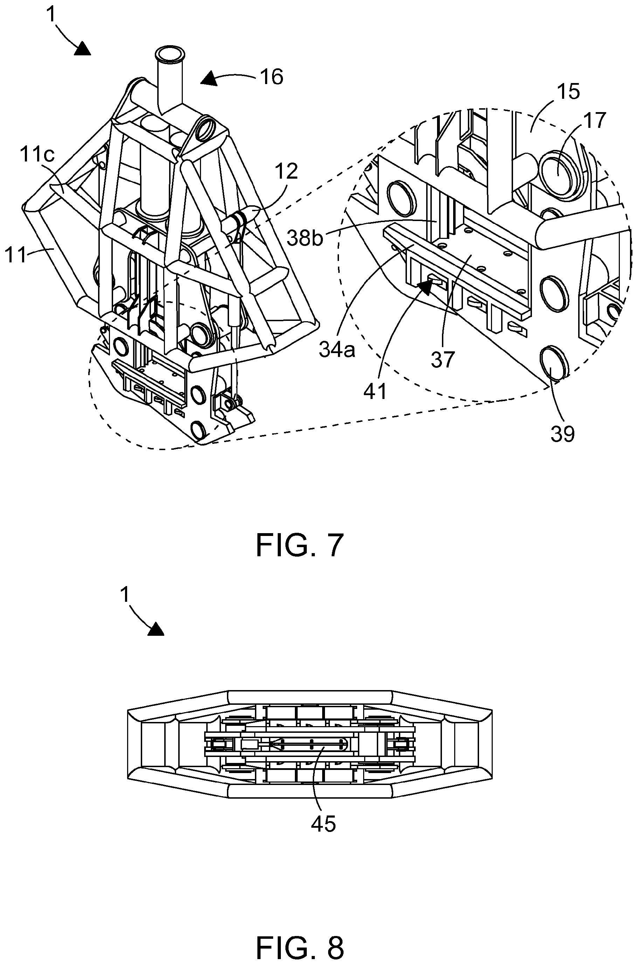

Figures 5-8 show similar views with the assembly in a closed configuration;

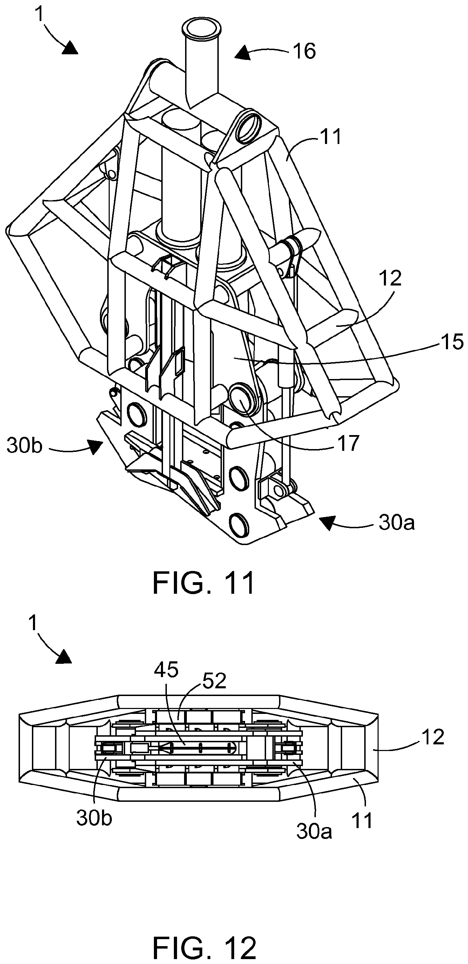

Figures 9-12 show similar views with the assembly in a gripping and closed configuration;

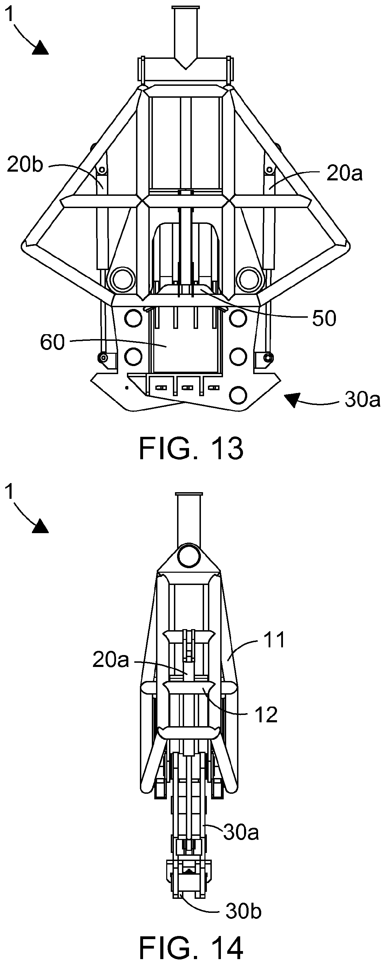

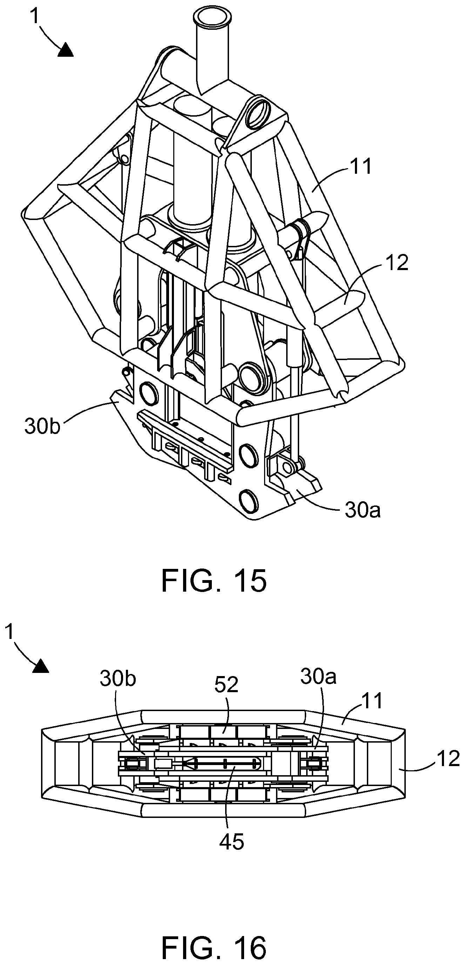

Figures 13-16 show similar views with the assembly in a closed and cutting configuration;
Figure 17 shows a perspective enlarged view from beneath the assembly in an open configuration; and
Figure 18 shows an enlarged view of a locking dog array in the assembly.

### DETAILED DESCRIPTION

Referring now to the drawings, a subsea cutting assembly 1 for handling and cutting subsea structures comprises a frame 10 formed from a lattice of horizontal and vertical struts 11. The frame 10 can essentially be considered as having front and rear faces which are formed by the struts 11, and the front and rear faces are interconnected by crossbeams 12 forming much shorter sides. The struts and crossbeams in this example are in the form of hollow tubulars welded together. The front and rear faces are equidistantly spaced from a central vertical axis of the frame.

The frame 10 in this example has an upper end which is adapted to connect to apparatus for lifting and handling the assembly 1, such as an ROV or crane, by means of a T-bar which is pivotable around a horizontal axis. The T-bar 16 takes the form of an inverted T, with the stem of the T adapted to connect to the ROV or crane, and with the bar of the T forming the pivot axis permitting the frame 10 to move pivotally around the axis of the bar, which reduces stress on the lifting apparatus.

The frame 10 has an opening at its lower end, opposite to the T-bar 16. A pocket is formed inside the frame, between the front and rear faces and two short sides, and accessible from the opening at the lower end, for accommodating the components of the assembly 1 inside the pocket for protection of the components inside the pocket and so that the loads on the components can be transferred onto the frame.

The various parts of the assembly 1 are herein described for convenience with respect to the normal operating procedures of the assembly 1 and with the normal orientation of the assembly 1 during use as shown in the drawings, where the part of the frame where the T-bar 16 attaches to the lifting apparatus is designated as the "top" or "upper part" and the other end of the frame is the "bottom" or "lower part", and that "vertical" and "horizontal" references have an understanding that is consistent with this and with the drawings, but it will be appreciated that this directional language is purely for the convenience of the reader, and it is not limiting on the scope of the present disclosure, and the skilled reader will understand that the assembly 1 can be used in different orientations.

The opening at the lower end of the frame 10 is adapted to receive first and second arms 30a, 30b, which are pivotally connected to the frame via a yoke 15. The yoke 15 comprises a pair of parallel inverted U-shaped plates spaced between the front and rear faces, which interconnect with at least four of the cross beams 12 on the frame 10. The yoke 15 is rigidly connected to the frame 10 at the cross beams 12. The first and second arms 30a, 30b are adapted to transform between open and closed configurations by pivoting around pivot points 17 on the yoke 15, in order to close around the structure to be handled and cut, when the arms 30a, 30b are in the closed configuration.

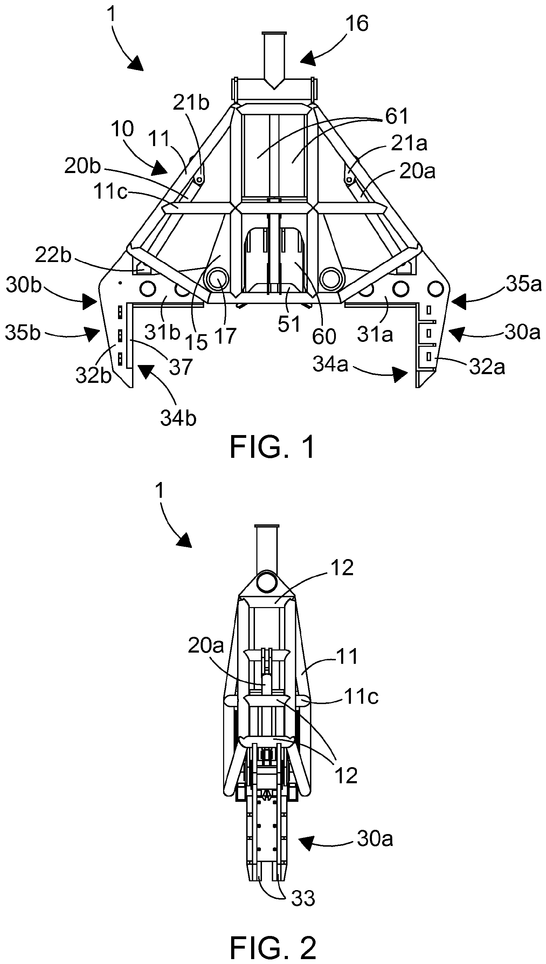

The front and rear faces of the frame 10 are generally triangular. The rear face is shown best in Fig 1, and the front face generally corresponds with the exception of the difference between the first and second arms 30a,b as will be described below. The frame 10 is arranged in two parts, an upper triangular part bearing the T-bar, and a lower part housing the arms 30a,b and having the opening. The upper and lower parts are separated by a pair of central horizontal struts 11c traversing respective front and rear faces. The front and rear faces of the upper part of the frame each diverge outwardly from the T-bar, and are generally parallel in the central portion of the lower part as can be seen from Fig 2, tapering as they diverge to the sides of the frame 10.

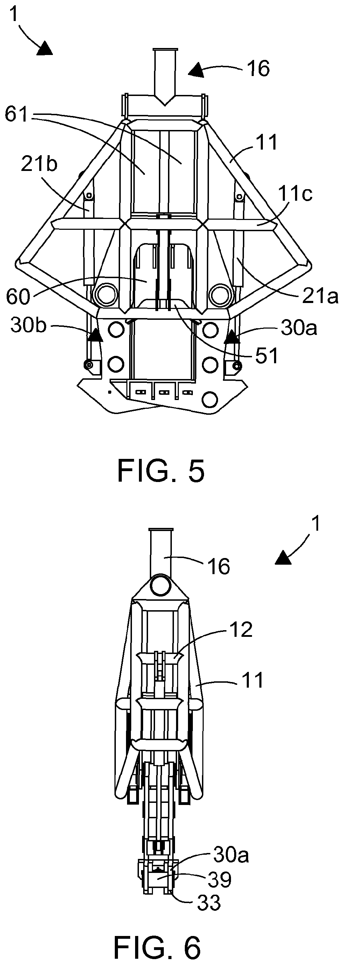

A pair of ram assemblies 20a, 20b are mounted between the frame 10 and respective arms 30a,b and are configured for moving the first and second arms 30a, 30b between the open and closed configurations. The ram assemblies 20a, 20b are anchored between upper 21a, 21b and lower 22a, 22b padeyes. The upper padeyes 21a,b are connected to crossbeams 12 in the upper part of the frame, on respective outwardly divergent sides of the frame. The lower padeyes 22a,b are connected to the outer face of respective arms 30a,b. Extension of the ram assemblies 20a,b drives the arms 30a,b in rotation around the pivot points on the yoke 15 to close the arms (as shown in Fig 5). Contraction of the ram assemblies 20a,b opens the arms (as shown in Fig 1).

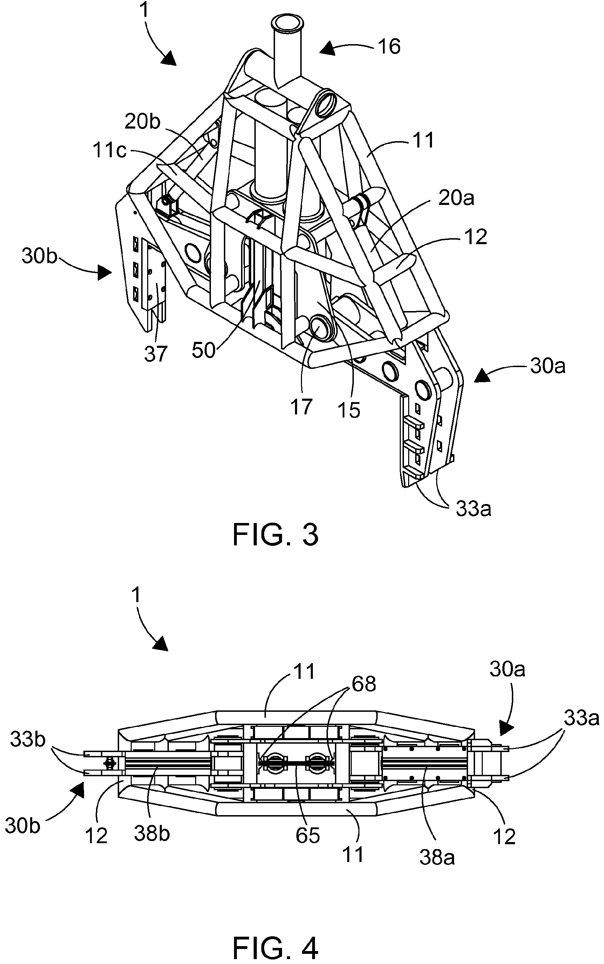

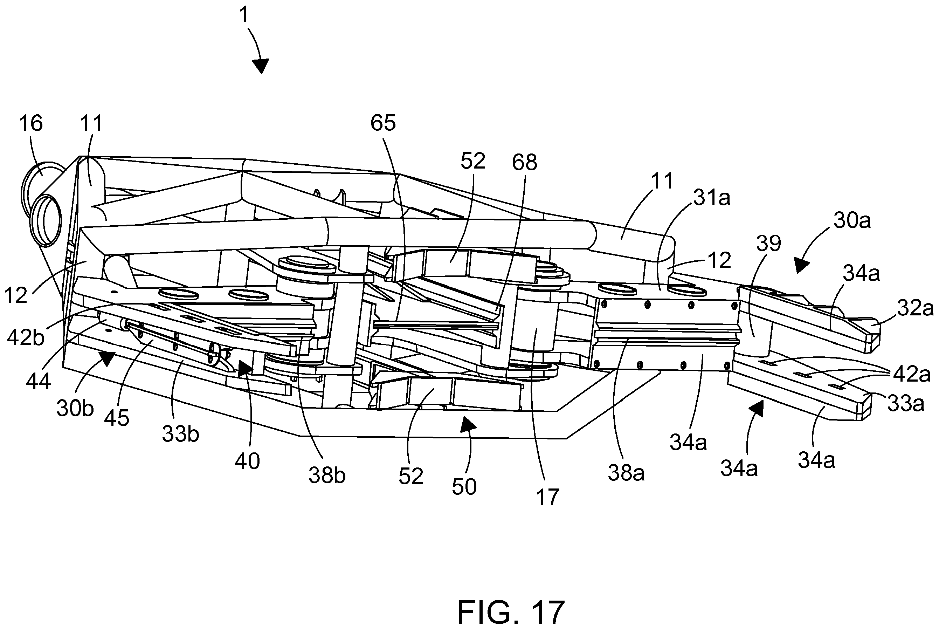

The lower part of the frame 10 also centrally houses a generally rectangular blade 60 generally parallel to the central vertical axis, the blade 60 having a cutting edge 65 on one short edge facing the opening of the frame 10. The blade 60 is movable along a straight path guided by a pair of blade guides 68 mounted on either side of the blade 60 between the yoke plates. The blade guides 68 comprise generally U-shaped channels, as best seen in Figs 4 and 17, with openings which are aligned with the central axis of the frame 10 and which face one another and the long side edges of the blade 60. The blade guides 68 receive the long side edges of the blade 60, keeping it aligned with the central vertical axis of the frame 10 as it moves through the path defined by the blade guides 68.

In the open configuration, before any movement of the blade, 60, the blade 60 is housed in the lower part of the frame 10 between the blade guides 68. The blade 60 is moved by a pair of ram assemblies 61 which extend hydraulic pistons from cylinders to push the blade out of the frame 10 along the central vertical axis, and out of the ends of the U-shaped opposed blade guides 68. The ram assemblies 61 are housed in the upper part of the frame 10, and are braced between cross beams 12 at the T-bar 16 and at the yoke 15, which transfer all reaction loads directly to the frame 10. The ram assemblies 61 drive the blade 60 to cut a subsea structure such as a pipe located between the arms 30a,b when they are in the closed configuration, as will be described below.

The first and second arms 30a,b each comprise a first portion 31a,b and a second lower portion 32a,b, each having an inner face 34a,b and outer face 35a,b. The L-shaped features of the arms 30a,b in this example are arranged in a mirror image so that the inner faces 34a,b face one another, and so that the central vertical axis of the frame 10 passes through the midpoint of each of the arms 30a,b. In this example, the inner faces 34a,b of the first 31a,b and second 32a,b portions of each of the arms 30a,b form a general L-shape, which in this case forms a right angle of substantially 90° between the inner faces 34a,b of the first 31a,b and second 32a,b portions of each arm 30. The angles of each arm between the first and second portions are the same. In the open configuration, the first (upper or proximal) portions 31a,b are generally aligned with a common horizontal axis of the frame 10. In the closed configuration, as shown in Fig 5, the inner faces 34a,b of the first portions 31a,b and the second portions 32a,b are each parallel to one another and to the central vertical axis of the frame 10. The inner faces 34a,b of the second portions 32a,b of each arm 30a,b are planar, having a flat surface and because of the 90° angle between the inner faces 34a,b of the first 31a,b and second 32a,b portions of each arm 30, the inner faces 34a,b of the second portions 32a,b are mutually parallel and aligned with one another in the closed configuration.

Each arm 30a,b in this example is formed from two plates 33a,b, which are arranged parallel to one another and spaced on either side of a central plane (through which the central axis of the frame passes) between the front and rear faces, with opposed faces of the plates 33a,b facing one another and exposed faces of the plates 33a,b facing away from one another. The arm plates 33a,b are rigidly connected by beams 39 in the form of tubular rods. A proximal or upper portion of each plate 33a,b that forms the first portion 31a,b of each arm 30a,b is attached at one end to the frame 10 via the pivot 17. A distal or lower portion of each plate 33a,b that forms the second portion 32a,b of each arm 30a,b is connected to the proximal portion in a cantilever manner at one end of the distal portion of the arm 30a,b, so that the arm 30a,b terminates at the free end of the distal portion.

In this example, the plates 33a,b are formed (e.g. profile cut or stamped) from a single piece of metal and are spaced apart from one another and connected to each other across a gap formed between the opposed faces of the plates 33a,b. The first arm 30a has a larger gap between its plates 33a than the second arm 30b, forming a recess in the first arm 30a adapted to receive the second arm 30b therein. The distance between the opposed faces of the plates 33a of the first arm 30a is substantially equal to the distance between the exposed faces of the plates 33b of the second arm 30b, and the second portion 32b of the second arm 30b is arranged to fit within the recess between the opposed faces of the plates 33a of the first arm 30a when the arms 30a,b are in the closed configuration. The beams 39 are outside the recess.

In this example, the plates 33a,b are parallel to each other, with each plate 33a,b in an arm 30a,b optionally completely aligned with the other plate 33a,b in the same arm 30a,b. In this example, the plates 33a,b comprise a number of apertures which helps to reduce the overall weight of the assembly 1.

In this example, each arm 30a,b incorporates on its outer face a heel that extends from the interconnection between the first and second portions 31a,b, 32a,b of each arm 30a,b towards the frame when the arms 30a,b are in the open configuration. An outer face of the heel is chamfered or tapered, and the heel extends in alignment with the inner face 34a,b of the second portions of the arms 30a,b. The heel engages a stop member in the form of a crossbeam 12 on the frame 10 when the arms 30a,b are open, thus limiting the travel of the arms 30a,b around the pivot 17 and transferring loads from the arms 30a,b directly to the crossbeam 12 on the frame 10.

In this example, the distal end of the second portion 32a,b of each arm 30a,b has a pointed tip which is adapted to penetrate into the substrate supporting a structure to be handled and cut. The penetration of the substrate can occur when the assembly first engages the substrate, and/or during grabbing of the subsea structure as the arms 30a,b move from the open configuration to the closed configuration, around the subsea structure. The plates 33a,b of the arms 30a,b enhance the arms' ability to penetrate substrates such the sea bed, as the plates 33a,b have a relatively slim profile, which reduces the resistance to movement of the arms 30a,b and reduces displacement of sea bed material as the arms 30a,b move around and under the subsea structure during closing.

Each arm 30a,b, reacts through the pivot points 17 on the frame against the opposing arm 30a,b as they rotate around the pivot points 17 and move together into the closed configuration. This further enhances the ability of each arm to penetrate the substrate, as, rather than relying on the weight of the assembly 1 to provide the force for penetration, the rams within the ram assemblies 20a,b are instead providing the force. The rams generate far more force than the weight of the assembly 1 itself, resulting in effective penetration even where the substrate may be tightly compacted around the pipe, bundle, or cable to be cut.

Also, due to the angles between the first and second portions, the pointed tips of the second portions penetrating the substrate themselves travel in converging arcs between the open and closed configurations, and reduce the amount of penetration needed to engage the structure correctly between the arms prior to the cutting operation.

In this example, the inner face of the second portion of one arm 30, e.g. the second arm 30b, incorporates an anvil surface in the form of a planar anvil plate 37. The anvil plate 37 acts as an anvil for the blade to cut against when cutting through the structure. The anvil plate 37 faces into the area enclosed by the arms when the arms are in the closed configuration, and in that configuration, is disposed generally horizontal to provide an anvil for the blade 60 to cut against when moving along the central vertical axis, and is parallel to the inner surfaces of the second portions 32a,b of the arms 30a,b, which optionally combine in the same plane as the anvil plate 37 to resist forces applied to the structure during cutting. Optionally the inner surfaces of the second portion of at least one of the arms (here the second arm 30b) can be formed by the anvil plate 37. The anvil plate 37 here is formed of hardened steel.

The inner faces of both of the arms 30a,b in this example optionally combine in a common plane with the anvil plate (e.g. with the second arm 30b in the recess of the first arm 30a) to form the inner face of the cutting assembly.

In this example the subsea cutting assembly 1 comprises a locking mechanism 40 that is adapted to lock the distal portions of the arms 30a,b together when the arms 30a,b are in the closed configuration. The second (lower, distal) portion of the second arm 30b slides between the opposed faces of the plates forming the second (lower, distal) portion of the first arm 30a and is received in the recess of the first arm 30a when the arms 30a,b move from the open to the closed configuration, and the locking mechanism in this example comprises latching members in the form of dogs 41 on one arm which engage in respective apertures on the other arm. In this case, the wider first arm portion 30a which receives the narrower second arm portion 30b in the recess comprises at least one rectangular aperture 42a in the distal portions of each plate 33a of the first arm 30a. The dogs 41 here are mounted in apertures 42b on the distal portion of the second arm 30b which align with the rectangular apertures 42a of the first arm 30a when the arms 30a,b are in the closed configuration.

The dogs 41 on the second arm 30b are adapted to selectively extend outwards from the apertures 42b in the second arm 30b through each aperture 42a of the first arm 30a when actuated. In this example each dog 41 is cammed so that as the arms 30a,b move into the closed configuration the dogs 41 are moved into a locking configuration by rotation around a pivot point 41p to lock the first and second arms 30a,b into the closed configuration. Each dog 41 comprises a hooked end that extends through and hooks over one end of the apertures 42a in the first arm 30a. Each hooked end faces "backwards" towards the first portion of the first arm 30a, which can in this example help the dogs on the second arm 30b to positively clamp the other arm 30a against relative movement between the arms 30a,b during cutting operations. The interlocking of the arms 30a,b, combined with the relative arrangement of the first and second portions of the arms 30a,b and the angles therebetween, provide a cutting assembly that is resistant to deformation, torsion, and splaying as a result of the significant forces applied during the cutting operation.

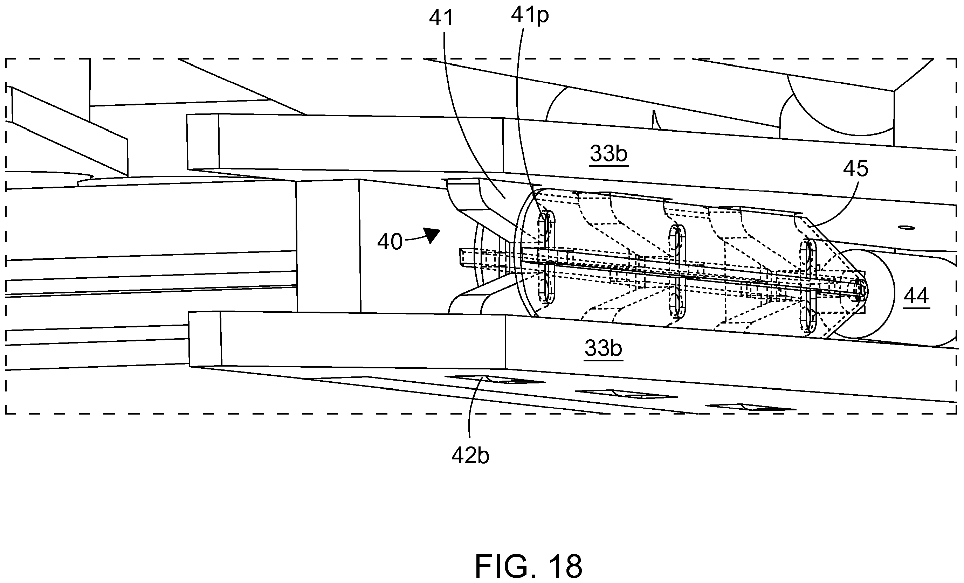

The dogs 41 are actuated by a ram assembly 44 acting on a cam plate 45, which is pushed by the ram assembly in a direction parallel to the axis of the second (lower, distal) portion of the second arm 30b, to swing the dogs 41 around their respective pivots 41p into the locking configuration. The details of the locking mechanism 40 are shown best in Fig 18, in which the details of the cam plate are shown in outline for clarity of the dogs 41.

The inner faces of the first portions of the arms 30a,b are adapted to form a guide for the blade, in this example during the cutting phase, spaced apart on opposite sides of the blade 60 in line with the central vertical axis, when the arms 30a,b are closed around the structure. The inner faces of the first portions 31a,b of the arms 30a,b comprise a blade guide 38a,b formed on the inner faces, in this example extending out from the inner faces in a radial direction when the arms 30a,b are closed. In this example the blade guides 38a,b comprise generally U-shaped channels formed between two protruding ribs welded or otherwise formed as protrusions on a plate fixed to or forming the inner face of the first proximal portion of the arms 30a,b and aligned with the blade guides 68a,b in the yoke 15. In this example each rib has one planar inner face perpendicular to the plate and forming an inner wall of the blade guide, and optionally a tapered outer face. The spacing between the ribs in these blade guides 38a,b is machined to closely match the thickness of the blade 60, to reduce deviation of the blade 60 from a straight path along the axis of the frame 10 during cutting. This reduces the risk of bending or misalignment of the blade 60 as it is engaging the subsea structure. When the arms 30a,b are closed, the blade guides 38 and 68 align to seamlessly guide the blade 60 along a continuous channel defining the cutting path when the blade 60 leaves the lower portion of the frame 10. Optionally the plate and the blade guides 38a,b can be manufactured from or faced with a different material to the arm 30a,b and/or the frame 10, for example a hard compound, or a material with a low friction coefficient. Optionally the blade 60 is held by the blade guides 38, 68 in a configuration where the cutting edge of the blade 60 is parallel to the anvil surface 37 of the cutting assembly.

The inner faces of the first 31a,b portions of the arms 30a,b complement the shape of the outer long edges of the blade 60. The cutting edge 65 of the blade at its lower surface is perpendicular to the inner faces of the first portions 31a,b of the arms 30a,b, and in this case, the profile of the cutting edge 65 of the blade 60 is shaped to match the profile of the second portions 32a,b of the arms 30a,b. Thus the cutting edge 65 of the blade 60 cuts against the anvil plate 37 along its whole length. The blade 60 is adapted to compress and/or crush the subsea structure being cut between the cutting edge 65 and the anvil plate 37 to deform the structure during the cut.

When the arms 30a,b are in the closed configuration, a gripping assembly 50 can assist with holding the subsea structure in position as the cutting operation is carried out, or to hold the subsea structure after cutting as the subsea structure is moved, for example. Here, the gripping assembly 50 includes two gripping devices each having a shaft 53 held in a guide 54, and a head 51 on the lower end of the shaft with three planar faces 52 on the head 51 facing the anvil plate 37 at different angles which are adapted to clamp a tubular on either side of the blade 60. The gripping devices are each driven by at least one ram, e.g. a hydraulic ram, and are locked in an extended (i.e. gripping) configuration by hydraulic pressure. The outermost planar surfaces of the gripping devices are oriented at angles that face the structure being cut, so that the shape of the gripping devices can centralise the structure to be cut on the middle of the anvil plate 37 and thereby centralise the loading on the arms 30a,b. The gripping devices also assist with centralising the centre of gravity of the assembly in combination with the subsea structure as the subsea structure is lifted.

Optionally each gripping device is actuated by a ram assembly comprising a piston and a hydraulic cylinder, and each gripping device is adapted to press down on the upper facing surface of the tubular being cut. The three planar surfaces are here set at different angles, with one central surface that is aligned to be parallel with the anvil plate 37, and two others extending outwardly from said central portion at an angle towards the second portions 32a,b of the arms 30a,b, suitable for engaging a pipe and securing it on the anvil plate 37 during the cut.

The blade 60 is urged to move on the path dictated by the blade guides 38,68 by the pair of ram assemblies 61 located in the upper part of the frame 10, and braced between crossbeams 12 between the yoke 15 and the T-bar 16. The ram assemblies 61 are actuated together to drive the blade 60 in a straight line to cut the structure.

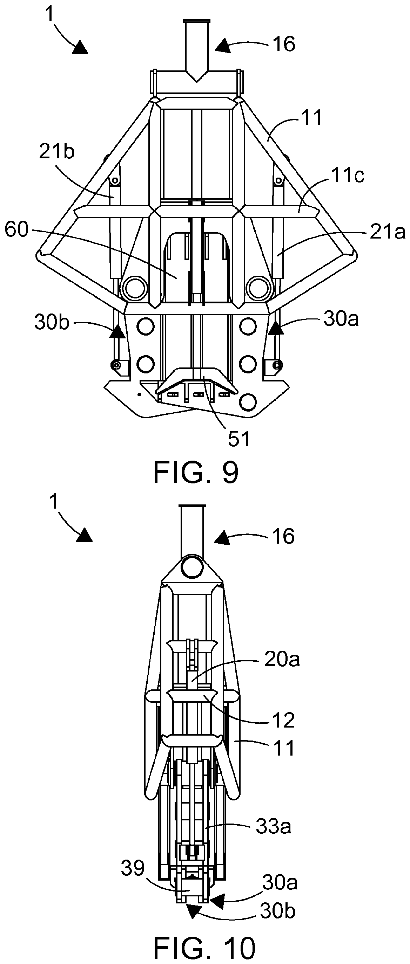

In operation, the assembly is lowered to the subsea structure (e.g. a pipe located on the seabed) with the arms 30a,b in the open configuration, and the pointed ends of the distal portions of the arms 30a,b facing downwards, and straddling the pipe to be cut, so that an arm 30a,b penetrates the seabed on respective opposite sides of the pipe. The narrow end-profile of the second portions of the arms 30a,b assists with the penetration of the substrate. Once the arms 30a,b have penetrated a short distance into the seabed, and optionally when the pointed ends of the arms 30a,b are beneath the pipe, the arms 30a,b are closed by actuating the ram assemblies 20a,b which extend the pistons from the cylinders and rotate the arms 30a,b around the pivots 17 to the closed configuration as shown in Fig 5. Once the arms 30a,b are closed around the pipe, the shafts 53 of the gripper assemblies 50 are released from the guides 54, and drop onto the upper surface of the pipe held between the inner surfaces of the arms 30a,b, as shown in Fig 9. In this configuration, the gripper assemblies 50 are optionally locked in position (by rams or ratchet devices etc.). The ram assembly actuating the dogs 41 is actuated and the dogs 41 extend to lock the second portions of the arms 30a,b together once the second portions are aligned. The second portion of the second arm 30b and the second portion of the first arm 30a each underlie and support the anvil plate 37 which is perpendicular to the central vertical axis of the frame 10 and parallel to the cutting edge of the blade 60. In this configuration the pipe is ready to be cut.

At the initiation of cutting, the blade 60 is pressed downwards onto the pipe by ram assemblies 61, which are symmetrically placed on either side of the axis of the frame 10 for equal distribution of force across the length of the cutting edge 65 of the blade 60. The blade 60 moves down the channel formed by the blade guides 68,38, which are aligned with one another forming a seamless channel. The blade cutting edge 65 engages the upper surface of the pipe, which is clamped in place by the gripping devices 50.

In this example the end of the structure is crushed or deformed between the blade 60 and the anvil plate 37 during the cut, helping to seal the conduit in the pipe and resist escape of contents of the cut pipe into the surrounding environment.

The end of the structure can be crushed symmetrically between the blade 60 and the anvil surface 37. In some examples, the end of the structure, e.g. a pipe, tubular, or bundle, can be initially round in cross-section and deforms along a cross-sectional axis (optionally a central axis) that is parallel to the anvil surface 37 and blade 60, optionally becoming ovalised or flattened. Optionally the end of the structure can be pressed together along the cross-sectional axis so that the end is at least partially closed. Optionally the end is completely pressed together and completely closed. Optionally the section of the structure being cut deforms to assume the profile of the blade 60 and/or the anvil surface 37.

The subsea cutting assembly 1 is also suitable for cutting of subsea cables. The crushing of the cut end of the cable may be limited, for example if the cable is armoured or multi-layered, some parts of the cable may be more resistant to deformation than others. Hence it may be the case that e.g. a central core manufactured from a malleable material, for example copper, cable filler, and/or insulation, may be crushed and thereby deform during cutting, but armoured layers or cables made from harder materials, for example fibre optic cables, do not readily deform, or deform to a lesser extent than the other layers of the structure.

After cutting the cut ends of the pipe can be gripped by the gripping devices 50, and moved to a different location, e.g. lifted to the surface for recovery to a vessel, or moved to a basket for recovery later. The cut sections can be released by the opening of the arms 30a,b under the control of the ram assemblies 21a,b.

In this example the end of the structure is crushed or deformed between the blade 60 and the anvil plate 37 during the cut, helping to seal the conduit in the pipe and resist escape of contents of the cut pipe into the surrounding environment.

The end of the structure can be crushed symmetrically between the blade 60 and the anvil surface 37. In some examples, the end of the structure, e.g. a pipe, tubular, or bundle, can be initially round in cross-section and deforms along a cross-sectional axis (optionally a central axis) that is parallel to the anvil surface 37 and blade 60, optionally becoming ovalised or flattened. Optionally the end of the structure can be pressed together along the cross-sectional axis so that the end is at least partially closed. Optionally the end is completely pressed together and completely closed. Optionally the section of the structure being cut deforms to assume the profile of the blade 60 and/or the anvil surface 37.

The subsea cutting assembly 1 is also suitable for cutting of subsea cables. The crushing of the cut end of the cable may be limited, for example if the cable is armoured or multi-layered, some parts of the cable may be more resistant to deformation than others. Hence it may be the case that e.g. a central core manufactured from a malleable material, for example copper, cable filler, and/or insulation, may be crushed and thereby deform during cutting, but armoured layers or cables made from harder materials, for example fibre optic cables, do not readily deform, or deform to a lesser extent than the other layers of the structure.

After cutting the cut ends of the pipe can be gripped by the gripping devices 50, and moved to a different location, e.g. lifted to the surface for recovery to a vessel, or moved to a basket for recovery later. The cut sections can be released by the opening of the arms 30a,b under the control of the ram assemblies 21a,b.

## Claims

1. A subsea cutting assembly (1) for handling and cutting subsea structures, comprising:
a frame (10);
first (30a) and second (30b) arms connected to the frame by a pivot (17), wherein the arms (30a, 30b) are adapted to transform between open and closed configurations by pivoting around the pivot (17);
a blade (60) movable with respect to the frame (10), wherein the blade (60) is adapted to cut a subsea structure disposed between the first (30a) and second (30b) arms when the first (30a) and second (30b) arms are in a closed configuration around the subsea structure;
each of the first (30a) and second (30b) arms comprise a first portion (31a, 31b) and a second portion (32a, 32b), the first (31a, 31b) and second (32a, 32b) portions each having an inner (34a, 34b) and outer (35a, 35b) face;
wherein when the arms (30a, 30b) are in the closed configuration the inner faces (34a, 34b) of the first portions (31a, 31b) of each arm (30a, 30b) are parallel relative to one another;
wherein the inner faces (34a, 34b) of the second portions (32a, 32b) of each arm (30a, 30b) are disposed at an angle of 90 degrees or less relative to the inner faces (34a, 34b) of the first portions (31a, 31b); and
wherein the inner faces (34a, 34b) of the second portions (32a, 32b) of each arm (30a, 30b) are planar;
**characterised in that** the inner faces (34a, 34b) of the first portions (31a, 31b) of the first and second arms (30a, 30b) incorporate a guide (38a, 38b) for the blade (60) when the arms (30a, 30b) are closed around the structure to be cut.

2. A subsea cutting assembly as claimed in claim 1, wherein the first and second arms (30a, 30b) incorporate a pointed tip adapted to penetrate a subsea substrate.

3. A subsea cutting assembly as claimed in claim 2, wherein each arm (30a, 30b) is actuated by at least one ram assembly (20a, 20b); wherein the or each ram assembly (20a, 20b) applies force to the first and second arms (30a, 30b) and thereby provides the force required for the first and second arms (30a, 30b) to penetrate a subsea substrate.

4. A subsea cutting assembly as claimed in any one of claims 1-3, wherein one of the first and second arms (30a, 30b) incorporates a recess in which the other (30a, 30b) is received in the closed configuration.

5. A subsea cutting assembly as claimed in claims 1-4, wherein each of the first and second arms (30a, 30b) comprise at least two plates (33a, 33b) arranged to be mutually parallel in each arm (30a, 30b) ; wherein the plates (33a, 33b) of the first arm (30a) are spaced apart by a greater distance than the plates (33a, 33b) of the second arm (30b), forming a recess between the plates (33a, 33b) of the first arm (30a) adapted to receive the second arm (30b) therein; and wherein the second arm (30b) is adapted to fit between the plates (33a, 33b) of the first arm (30a) when the first (30a) and second (30b) arms are in the closed configuration.

6. A subsea cutting assembly as claimed in any one of claims 1-5, comprising a locking mechanism (40) that is adapted to lock the arms (30a, 30b) against relative movement when the arms (30a, 30b) are in the closed configuration.

7. A subsea cutting assembly as claimed in any one of claims 1-6, wherein in the closed configuration, the second portion (32a, 32b) of at least one arm (30a, 30b) forms an anvil surface against which the subsea structure is cut; wherein the anvil surface comprises an anvil plate (37) forming at least a part of an inner face (32a, 32b) of one of the first and second arms (30a, 30b).

8. A subsea cutting assembly as claimed in claim 7, wherein the anvil surface (37) is disposed on the second arm (30b), which is received within a recess on the first arm (30a); wherein the anvil surface (37) is planar, and wherein the inner faces (32a, 32b) of the first and second arms (30a, 30b) are disposed in the same plane as the anvil surface (37) when the arms (30a, 30b) are closed.

9. A subsea cutting assembly as claimed in any one of claims 1-8, wherein the guide (38a, 38b) for the blade (60) comprises a channel formed between two protruding ribs on the inner face (34a, 34b) of each of the first portions (31a. 31b).

10. A subsea cutting assembly as claimed in any one of claims 1-9, incorporating a gripping device (50) to grip the structure being cut during a cutting operation.

11. A subsea cutting assembly as claimed in claim 10, wherein in the closed configuration, the second portion (32a, 32b) of at least one arm (30a, 30b) forms an anvil surface (37) against which the subsea structure is cut, and wherein the gripping device (50) aligns the structure to be cut with a central vertical axis of the subsea cutting assembly (1), and thereby centralises the gripping device (50) on the anvil surface (37).

12. A method of handling and cutting a subsea structure, the method including the steps of transforming first and second arms (30a, 30b) disposed on a subsea cutting assembly (1) from an open configuration to a closed configuration by pivoting the first and second arms (30a, 30b) around a pivot on a frame (10) of said subsea cutting assembly (1) to retain the subsea structure between the arms (30a, 30b); and cutting the subsea structure by moving a blade (60) with respect to the frame (10) of the subsea cutting assembly (1) when the arms (30a, 30b) are in the closed configuration around the subsea structure;
wherein each of the first and second arms (30a, 30b) comprise a first portion (31a, 31b) and a second portion (32a, 32b), the first (31a, 31b) and second (32a, 32b) portions each having an inner (34a, 34b) and outer (35a, 35b) face; wherein when the arms (30a, 30b) are in the closed configuration the inner faces (34a, 34b) of the first portions (31a, 31b) of each arm (30a, 30b) are parallel relative to one another; wherein the inner faces (34a, 34b) of the second portions (32a, 32b) of each arm (30a, 30b) are disposed at an angle of 90 degrees or less relative to the inner faces (34a, 34b) of the first portions (31a, 31b); and wherein the inner faces (34a, 34b) of the second portions (32a, 32b) of each arm (30a, 30b) are planar;
**characterised by** guiding the movement of the blade (60) when the arms (30a, 30b) are closed around the structure to be cut, wherein the movement of the blade (60) is guided by a blade guide (38a, 38b) formed on the inner faces (34a, 34b) of the first portions (31a, 31b) of the first and second arms (30a, 30b).

13. A method as claimed in claim 12, wherein the method includes sliding the second arm (30b) into a recess formed in the first arm (30a) during transformation between the open and closed configurations of the arms (30a, 30b).

14. A method as claimed in claim 11 or 12, wherein the method includes providing a planar anvil surface (37) on an inner face (34a, 34b) of the second portion (32a, 32b) of at least one arm (30a, 30b) for the blade (60) of the cutting assembly (1) to cut against, and cutting the subsea structure against the anvil surface (37).

15. A method as claimed in claim 14, including at least partially crushing at least one end of the subsea structure during the cutting operation.

16. A method as claimed in any one of claims 12-15, including resisting separation of the first and second arms (30a, 30b) when in the closed configuration by interlocking the first and second arms (30a, 30b) when closed.

## Patentansprüche

1. Eine Unterwasserschneidanordnung (1) zum Handhaben und Schneiden von Unterwasserstrukturen, die Folgendes beinhaltet:
einen Rahmen (10);
einen ersten (30a) und zweiten (30b) Arm, die mit dem Rahmen durch einen Schwenkpunkt (17) verbunden sind, wobei die Arme (30a, 30b) angepasst sind, um durch Schwenken um den Schwenkpunkt (17) zwischen einer geöffneten und einer geschlossenen Konfiguration zu wechseln;
eine Klinge (60), die in Bezug auf den Rahmen (10) beweglich ist, wobei die Klinge (60) angepasst ist, um eine Unterwasserstruktur, die sich zwischen dem ersten (30a) und zweiten (30b) Arm befindet, zu schneiden, wenn der erste (30a) und zweite (30b) Arm in einer geschlossenen Konfiguration um die Unterwasserstruktur sind;
wobei der erste (30a) und zweite (30b) Arm jeweils einen ersten Abschnitt (31a, 31b) und einen zweiten Abschnitt (32a, 32b) beinhalten, wobei jeder der ersten (31a, 31b) und zweiten (32a, 32b) Abschnitte eine innere (34a, 34b) und eine äußere (35a, 35b) Fläche aufweisen;
wobei, wenn die Arme (30a, 30b) in der geschlossenen Konfiguration sind, die inneren Flächen (34a, 34b) der ersten Abschnitte (31a, 31b) jedes Arms (30a, 30b) relativ zueinander parallel sind;
wobei sich die inneren Flächen (34a, 34b) der zweiten Abschnitte (32a, 32b) jedes Arms (30a, 30b) in einem Winkel von 90 Grad oder weniger relativ zu den inneren Flächen (34a, 34b) der ersten Abschnitte (31a, 31b) befinden; und
wobei die inneren Flächen (34a, 34b) der zweiten Abschnitte (32a, 32b) jedes Arms (30a, 30b) planar sind;
**dadurch gekennzeichnet, dass** die inneren Flächen (34a, 34b) der ersten Abschnitte (31a, 31b) des ersten und zweiten Arms (30a, 30b) eine Führung (38a, 38b) für die Klinge (60) besitzen, wenn die Arme (30a, 30b) um die zu schneidende Struktur geschlossen sind.

2. Unterwasserschneidanordnung gemäß Anspruch 1, wobei die ersten und zweiten Arme (30a, 30b) eine spitz zulaufende Spitze, die angepasst ist, um ein Unterwassersubstrat zu durchdringen, besitzen.

3. Unterwasserschneidanordnung gemäß Anspruch 2, wobei jeder Arm (30a, 30b) durch mindestens eine Druckkolbenanordnung (20a, 20b) betätigt wird; wobei die oder jede Druckkolbenanordnung (20a, 20b) Kraft auf den ersten und zweiten Arm (30a, 30b) ausübt und dadurch die für den ersten und zweiten Arm (30a, 30b) erforderliche Kraft, um ein Unterwassersubstrat zu durchdringen, bereitstellt.

4. Unterwasserschneidanordnung gemäß einem der Ansprüche 1-3, wobei einer von dem ersten und zweiten Arm (30a, 30b) eine Aussparung besitzt, in der der andere (30a, 30b) in der geschlossenen Konfiguration aufgenommen wird.

5. Unterwasserschneidanordnung gemäß Anspruchs 1-4, wobei der erste und zweite Arm (30a, 30b) jeweils mindestens zwei Platten (33a, 33b) beinhalten, die eingerichtet sind, um in jedem Arm (30a, 30b) einander parallel zu sein; wobei die Platten (33a, 33b) des ersten Arms (30a) mit einer größeren Distanz voneinander beabstandet sind als die Platten (33a, 33b) des zweiten Arms (30b), was zwischen den Platten (33a, 33b) des ersten Arms (30a) eine Aussparung bildet, die angepasst ist, um den zweiten Arm (30b) darin aufzunehmen; und wobei der zweite Arm (30b) angepasst ist, um zwischen die Platten (33a, 33b) des ersten Arms (30a) zu passen, wenn der erste (30a) und zweite (30b) Arm in der geschlossenen Konfiguration sind.

6. Unterwasserschneidanordnung gemäß einem der Ansprüche 1-5, die einen Arretiermechanismus (40) beinhaltet, der angepasst ist, um die Arme (30a, 30b) gegen eine Relativbewegung zu arretieren, wenn die Arme (30a, 30b) in der geschlossenen Konfiguration sind.

7. Unterwasserschneidanordnung gemäß einem der Ansprüche 1-6, wobei der zweite Abschnitt (32a, 32b) mindestens eines Arms (30a, 30b) in der geschlossenen Konfiguration eine Ambossoberfläche bildet, gegen die die Unterwasserstruktur geschnitten wird; wobei die Ambossoberfläche eine Ambossplatte (37) beinhaltet, die mindestens einen Teil einer inneren Fläche (32a, 32b) von einem des ersten und zweiten Arms (30a, 30b) bildet.

8. Unterwasserschneidanordnung gemäß Anspruch 7, wobei sich die Ambossoberfläche (37) auf dem zweiten Arm (30b) befindet, der innerhalb einer Aussparung auf dem ersten Arm (30a) aufgenommen wird; wobei die Ambossoberfläche (37) planar ist und wobei sich die inneren Flächen (32a, 32b) des ersten und zweiten Arms (30a, 30b) in der gleichen Ebene wie die Ambossoberfläche (37) befinden, wenn die Arme (30a, 30b) geschlossen sind.

9. Unterwasserschneidanordnung gemäß einem der Ansprüche 1-8, wobei die Führung (38a, 38b) für die Klinge (60) einen Kanal beinhaltet, der zwischen zwei hervorstehenden Rippen auf der inneren Fläche (34a, 34b) von jedem der ersten Abschnitte (31a, 31b) gebildet ist.

10. Unterwasserschneidanordnung gemäß einem der Ansprüche 1-9, die eine Greifvorrichtung (50) besitzt, um die Struktur, die während eines Schneidvorgangs geschnitten wird, zu greifen.

11. Unterwasserschneidanordnung gemäß Anspruch 10, wobei in der geschlossenen Konfiguration der zweite Abschnitt (32a, 32b) mindestens eines Arms (30a, 30b) eine Ambossoberfläche (37) bildet, gegen die die Unterwasserstruktur geschnitten wird, und wobei die Greifvorrichtung (50) die zu schneidende Struktur auf eine senkrechte Mittelachse der Unterwasserschneidanordnung (1) ausrichtet und dadurch die Greifvorrichtung (50) auf der Ambossoberfläche (37) zentralisiert.

12. Ein Verfahren zum Handhaben und Schneiden einer Unterwasserstruktur, wobei das Verfahren die folgenden Schritte umfasst: Wechseln eines ersten und zweiten Arms (30a, 30b), die sich auf einer Unterwasserschneidanordnung (1) befinden, von einer geöffneten Konfiguration zu einer geschlossenen Konfiguration durch Schwenken des ersten und zweiten Arms (30a, 30b) um einen Schwenkpunkt auf einem Rahmen (10) der Unterwasserschneidanordnung (1), um die Unterwasserstruktur zwischen den Armen (30a, 30b) festzuhalten; und Schneiden der Unterwasserstruktur durch das Bewegen einer Klinge (60) in Bezug auf den Rahmen (10) der Unterwasserschneidanordnung (1), wenn die Arme (30a, 30b) in der geschlossenen Konfiguration um die Unterwasserstruktur sind;
wobei der erste und zweite Arm (30a, 30b) jeweils einen ersten Abschnitt (31a, 31b) und einen zweiten Abschnitt (32a, 32b) beinhalten, wobei jeder der ersten (31a, 31b) und zweiten (32a, 32b) Abschnitte eine innere (34a, 34b) und eine äußere (35a, 35b) Fläche aufweisen;
wobei, wenn die Arme (30a, 30b) in der geschlossenen Konfiguration sind, die inneren Flächen (34a, 34b) der ersten Abschnitte (31a, 31b) jedes Arms (30a, 30b) relativ zueinander parallel sind; wobei sich die inneren Flächen (34a, 34b) der zweiten Abschnitte (32a, 32b) jedes Arms (30a, 30b) in einem Winkel von 90 Grad oder weniger relativ zu den inneren Flächen (34a, 34b) der ersten Abschnitte (31a, 31b) befinden; und wobei die inneren Flächen (34a, 34b) der zweiten Abschnitte (32a, 32b) jedes Arms (30a, 30b) planar sind;
**gekennzeichnet durch** Führen der Bewegung der Klinge (60), wenn die Arme (30a, 30b) um die zu schneidende Struktur geschlossen sind, wobei die Bewegung der Klinge (60) durch eine Klingenführung (38a, 38b) geführt wird, die auf den inneren Flächen (34a, 34b) der ersten Abschnitte (31a, 31b) der ersten und zweiten Arme (30a, 30b) gebildet ist.

13. Verfahren gemäß Anspruch 12, wobei das Verfahren, während dem Wechsel zwischen der geöffneten und geschlossenen Konfiguration der Arme (30a, 30b), das Gleiten des zweiten Arms (30b) in eine Aussparung, die in dem ersten Arm (30a) gebildet ist, umfasst.

14. Verfahren gemäß Anspruch 11 oder 12, wobei das Verfahren Folgendes umfasst: Bereitstellen einer planaren Ambossoberfläche (37) auf einer inneren Fläche (34a, 34b) des zweiten Abschnitts (32a, 32b) mindestens eines Arms (30a, 30b), gegen die die Klinge (60) der Schneidanordnung (1) schneiden kann, und Schneiden der Unterwasserstruktur gegen die Ambossoberfläche (37).

15. Verfahren gemäß Anspruch 14, das mindestens teilweises Quetschen mindestens eines Endes der Unterwasserstruktur während des Schneidvorgangs umfasst.

16. Verfahren gemäß einem der Ansprüche 12-15, das das Widerstehen gegen die Trennung des ersten und zweiten Arms (30a, 30b) voneinander, wenn sie in der geschlossenen Konfiguration sind, durch Ineinandergreifen des ersten und zweiten Arms (30a, 30b), wenn sie geschlossen sind, umfasst.

## Revendications

1. Un ensemble de coupe sous-marin (1) pour la manutention et la coupe de structures sous-marines, comprenant :
un bâti (10) ;
des premier (30a) et deuxième (30b) bras reliés au bâti par un pivot (17), les bras (30a, 30b) étant conçus pour se transformer entre des configurations ouverte et fermée par pivotement autour du pivot (17) ;
une lame (60) mobile relativement au bâti (10), la lame (60) étant conçue pour couper une structure sous-marine disposée entre les premier (30a) et deuxième (30b) bras quand les premier (30a) et deuxième (30b) bras sont dans une configuration fermée autour de la structure sous-marine ;
chacun des premier (30a) et deuxième (30b) bras comprend une première portion (31a, 31b) et une deuxième portion (32a, 32b), les premières (31a, 31b) et deuxièmes (32a, 32b) portions ayant chacune une face interne (34a, 34b) et une face externe (35a, 35b) ;
dans lequel quand les bras (30a, 30b) sont dans la configuration fermée, les faces internes (34a, 34b) des premières portions (31a, 31b) de chaque bras (30a, 30b) sont parallèles l'une par rapport à l'autre ;
dans lequel les faces internes (34a, 34b) des deuxièmes portions (32a, 32b) de chaque bras (30a, 30b) sont disposées à un angle de 90 degrés ou moins par rapport aux faces internes (34a, 34b) des premières portions (31a, 31b) ; et
dans lequel les faces internes (34a, 34b) des deuxièmes portions (32a, 32b) de chaque bras (30a, 30b) sont planes ;
**caractérisé en ce que** les faces internes (34a, 34b) des premières portions (31a, 31b) des premier et deuxième bras (30a, 30b) incorporent un guide (38a, 38b) pour la lame (60) quand les bras (30a, 30b) sont fermés autour de la structure à couper.

2. Un ensemble de coupe sous-marin tel que revendiqué dans la revendication 1, dans lequel les premier et deuxième bras (30a, 30b) incorporent une extrémité pointue conçue pour pénétrer dans un substrat sous-marin.

3. Un ensemble de coupe sous-marin tel que revendiqué dans la revendication 2, dans lequel chaque bras (30a, 30b) est actionné par au moins un ensemble à piston (20a, 20b) ; dans lequel le ou chaque ensemble à piston (20a, 20b) applique une force sur les premier et deuxième bras (30a, 30b) et fournit ainsi la force requise pour que les premier et deuxième bras (30a, 30b) pénètrent dans un substrat sous-marin.

4. Un ensemble de coupe sous-marin tel que revendiqué dans l'une quelconque des revendications 1 à 3, dans lequel l'un des premier et deuxième bras (30a, 30b) incorpore un évidement dans lequel l'autre (30a, 30b) est reçu dans la configuration fermée.

5. Un ensemble de coupe sous-marin tel que revendiqué dans les revendications 1 à 4, dans lequel chacun des premier et deuxième bras (30a, 30b) comprend au moins deux plaques (33a, 33b) agencées pour être parallèles entre elles dans chaque bras (30a, 30b) ; dans lequel les plaques (33a, 33b) du premier bras (30a) sont espacées l'une de l'autre d'une plus grande distance que les plaques (33a, 33b) du deuxième bras (30b), formant un évidement entre les plaques (33a, 33b) du premier bras (30a) conçu pour y recevoir le deuxième bras (30b) ; et dans lequel le deuxième bras (30b) est conçu pour se loger entre les plaques (33a, 33b) du premier bras (30a) quand les premier (30a) et deuxième (30b) bras sont dans la configuration fermée.

6. Un ensemble de coupe sous-marin tel que revendiqué dans l'une quelconque des revendications 1 à 5, comprenant un mécanisme de verrouillage (40) qui est conçu pour verrouiller les bras (30a, 30b) contre un déplacement relatif quand les bras (30a, 30b) sont dans la configuration fermée.

7. Un ensemble de coupe sous-marin tel que revendiqué dans l'une quelconque des revendications 1 à 6, dans lequel dans la configuration fermée, la deuxième portion (32a, 32b) d'au moins un bras (30a, 30b) forme une surface d'enclume contre laquelle la structure sous-marine est coupée ; dans lequel la surface d'enclume comprend une plaque d'enclume (37) formant au moins une partie d'une face interne (32a, 32b) de l'un des premier et deuxième bras (30a, 30b).

8. Un ensemble de coupe sous-marin tel que revendiqué dans la revendication 7, dans lequel la surface d'enclume (37) est disposée sur le deuxième bras (30b), qui est reçu à l'intérieur d'un évidement sur le premier bras (30a) ; dans lequel la surface d'enclume (37) est plane, et dans lequel les faces internes (32a, 32b) des premier et deuxième bras (30a, 30b) sont disposées dans le même plan que la surface d'enclume (37) quand les bras (30a, 30b) sont fermés.

9. Un ensemble de coupe sous-marin tel que revendiqué dans l'une quelconque des revendications 1 à 8, dans lequel le guide (38a, 38b) pour la lame (60) comprend une rainure formée entre deux nervures saillantes sur la face interne (34a, 34b) de chacune des premières portions (31a, 31b).

10. Un ensemble de coupe sous-marin tel que revendiqué dans l'une quelconque des revendications 1 à 9, incorporant un dispositif d'agrippement (50) pour agripper la structure qui est coupée pendant une opération de coupe.

11. Un ensemble de coupe sous-marin tel que revendiqué dans la revendication 10, dans lequel dans la configuration fermée, la deuxième portion (32a, 32b) d'au moins un bras (30a, 30b) forme une surface d'enclume (37) contre laquelle la structure sous-marine est coupée, et dans lequel le dispositif d'agrippement (50) aligne la structure à couper avec un axe vertical central de l'ensemble de coupe sous-marin (1), et centralise ainsi le dispositif d'agrippement (50) sur la surface d'enclume (37).

12. Un procédé de manutention et de coupe d'une structure sous-marine, le procédé incluant les étapes de transformation de premier et deuxième bras (30a, 30b) disposés sur un ensemble de coupe sous-marin (1) d'une configuration ouverte à une configuration fermée par pivotement des premier et deuxième bras (30a, 30b) autour d'un pivot sur un bâti (10) dudit ensemble de coupe sous-marin (1) pour retenir la structure sous-marine entre les bras (30a, 30b) ; et de coupe de la structure sous-marine par déplacement d'une lame (60) relativement au bâti (10) de l'ensemble de coupe sous-marin (1) quand les bras (30a, 30b) sont dans la configuration fermée autour de la structure sous-marine ;
dans lequel chacun des premier et deuxième bras (30a, 30b) comprend une première portion (31a, 31b) et une deuxième portion (32a, 32b), les premières (31a, 31b) et deuxièmes (32a, 32b) portions ayant chacune une face interne (34a, 34b) et une face externe (35a, 35b) ;
dans lequel quand les bras (30a, 30b) sont dans la configuration fermée, les faces internes (34a, 34b) des premières portions (31a, 31b) de chaque bras (30a, 30b) sont parallèles l'une par rapport à l'autre ; dans lequel les faces internes (34a, 34b) des deuxièmes portions (32a, 32b) de chaque bras (30a, 30b) sont disposées à un angle de 90 degrés ou moins par rapport aux faces internes (34a, 34b) des premières portions (31a, 31b) ; et dans lequel les faces internes (34a, 34b) des deuxièmes portions (32a, 32b) de chaque bras (30a, 30b) sont planes ;
**caractérisé par** le guidage du déplacement de la lame (60) quand les bras (30a, 30b) sont fermés autour de la structure à couper, le déplacement de la lame (60) étant guidé par un guide-lame (38a, 38b) formé sur les faces internes (34a, 34b) des premières portions (31a, 31b) des premier et deuxième bras (30a, 30b).

13. Un procédé tel que revendiqué dans la revendication 12, le procédé incluant le glissement du deuxième bras (30b) dans un évidement formé dans le premier bras (30a) pendant la transformation entre les configurations ouverte et fermée des bras (30a, 30b).

14. Un procédé tel que revendiqué dans la revendication 11 ou la revendication 12, le procédé incluant la fourniture d'une surface d'enclume plane (37) sur une face interne (34a, 34b) de la deuxième portion (32a, 32b) d'au moins un bras (30a, 30b) pour que la lame (60) de l'ensemble de coupe (1) coupe contre celle-ci, et la coupe de la structure sous-marine contre la surface d'enclume (37).

15. Un procédé tel que revendiqué dans la revendication 14, incluant l'écrasement au moins partiel d'au moins un bout de la structure sous-marine pendant l'opération de coupe.

16. Un procédé tel que revendiqué dans l'une quelconque des revendications 12 à 15, incluant la résistance à la séparation des premier et deuxième bras (30a, 30b) quand ils sont dans la configuration fermée par interverrouillage des premier et deuxième bras (30a, 30b) quand ils sont fermés.
